# EUROPÄISCHE PATENTSCHRIFT

(11) **EP 0 462 248 B1**
(45) Veröffentlichungstag und Bekanntmachung des Hinweises auf die Patenterteilung: **28.12.1994**
(21) Anmeldenummer: 91901684.0
(22) Anmeldetag: 09.01.1991
(51) Int. Cl.: B29C 47/92

(54) **Verfahren zur kontinuierlichen Herstellung einer bahnförmigen Kunststoffolie aus thermoplastischem Kunststoff**
Process for continuous production of a film of thermoplastic resin
Procédé de fabrication continuelle d'une feuille thermo- plastique

(30) Priorität: 10.01.1990 DE 4000530
(43) Veröffentlichungstag der Anmeldung: 27.12.1991
(73) Patentinhaber: Reifenhäuser GmbH & Co., Maschinenfabrik, 53844 Troisdorf (DE)
(72) Erfinder: PREDÖHL, Wilhelm, D-5202 Hennef-Bröl (DE)
(74) Vertreter: Honke, Manfred, Dr.-Ing.
(86) Internationale Anmeldenummer: DE9100007
(87) Internationale Veröffentlichungsnummer: WO9110553

(56) Entgegenhaltungen:
- EP-A- 0 260 608
- EP-A- 0 260 608
- EP-A- 0 321 936
- EP-A- 0 321 936
- DE-A- 2 658 518
- DE-A- 2 658 518
- DE-C- 3 740 088
- DE-C- 3 740 088

## Beschreibung

Die Erfindung betrifft ein Verfahren zur kontinuierlichen Herstellung einer bahnförmigen Kunststoffolie aus thermoplastischem Kunststoff sowie zum Aufwickeln dieser Kunststoffolie zu einem Coil, wobei die hergestellte Kunststoffolie ein Dickenfehlerprofil mit systematischen Dickenplusfehlern und Dickenminusfehlern aufweist, das Dickenfohlerprofil der hergestellten Kunststoffolie vor dem Aufwickeln der Kunststoffolie zum Coil gemessen wird, wobei sich die Dickenfehler von mehreren Windungen überlagern, wobei ein die Dickenplusfehler bzw. die Dickenminusfehler kompensierendes Dickenfehlerprofil für die Kunststoffolie eingestellt und durch Überlagerung der das gemessene Dickenfehlerprofil aufweisenden Windungen mit das kompensierende Dickenfehlerprofil aufweisenden Windungen ein ausreichend zylindrischer Coil gebildet wird. - Dickenfehler bezeichnet eine negative oder positive Abweichung vom Sollwert. Der Ausdruck systematische Dickenfehler bezeichnet diejenigen Dickenfehler, die systembedingt sind, beispielsweise auf Werkzeugtoleranzen beruhen. Sie sind unvermeidbar und erscheinen ohne weiteres im Querschnittsprofil der hergestellten Kunststoffolie, und zwar im stationären, eingefahrenen Zustand der entsprechenden Anlage für die Herstellung der Kunststoffolie stets an gleicher Stelle. Werden nicht besondere Maßnahmen verwirklicht, so addieren sich diese systematischen Dickenfehler beim Aufwickeln zum Soll zu positiven oder auch negativen Fehleranhäufungen, die in der Praxis als Faßreifen bezeichnet werden.

Bei dem bekannten Verfahren, von dem die Erfindung ausgeht (EP-A-0 260 608), wird nach dem Erfassen einer Dickstelle im Dickenfehlerprofil eine diese kompensierende Dünnstelle extrudiert, so daß nach einer oder mehreren Windungen die Dickstelle durch Überlagerung mit Dünnstellen kompensiert und ein ausreichend zylindrisches Coil errreicht wird. Es versteht sich, daß bei einer erfaßten Dünnstelle analog verfahren wird. Jedenfalls wird, sobald an einer Dickstelle bzw. Dünnstelle die Kompensation erreicht ist, der entsprechende, streifenförmige Bereich in der Kunststoffolie auf die mittlere Foliendicke, d. h. den Sollwert, eingeregelt. Insoweit ist im Rahmen der bekannten Maßnahmen das Kompensieren eine Anpassung an die Solldicke. Es wird so nach Maßgabe der klassischen Regeltechnik eine Herstellung von bahnförmigen Kunststoffolien angestrebt, deren Dicke über die gesamte Folienbreite dem Sollwert entspricht. Das so erreichte Ergebnis ist verbesserungsfähig.

Die zum Stand der Technik gehörende Praxis kennt im umfangreichen Maße Verfahren, die nicht mit regeltechnischen Maßnahmen, die, wie beschrieben, eine möglichst enge Annäherung des Istwertes der Dicke der Kunststoffolie an einen vorgegebenen Sollwert suchen, sondern das Dickenfehlerprofil, welches die Kunststoffolie mitbringt, beim Aufwickeln über die Breite des Coils gleichmäßig gleichsam verteilen. Es tritt beim Aufwickeln der Kunststoffolie nicht mehr eine Dickenfehleraddition ein, sondern eine Fehlerverteilung, und zwar derart, daß das Coil von Effekten, die aus beim Aufwickeln addierten Dickenfehlern resultieren, praktisch frei ist. Die Dickenfehler liegen vielmehr von Lage zu Lage an einer anderen Stelle im Coil. Um dieses zu erreichen, wird bei der Herstellung von sogenannten Blasfolien, bei denen zunächst ein thermoplastifizierter Schlauch erzeugt wird, dieser zur Schlauchfolie aufgeblasen und die Schlauchfolie flachgelegt wird, entweder der Blaskopf mit dem Werkzeug für die Extrusion des Schlauches in eine zumeist hinundher drehende periodische Bewegung versetzt und/oder es wird die sogenannte Flachlegevorrichtung entsprechend periodisch bewegt. Das ist aufwendig und in bezug auf den erreichten Effekt häufig nicht voll befriedigend, weil am Coil störende Unebenheiten, wenn auch keine ausgeprägten Faßreifen sich ausbilden können. Um die beschriebene Fehlerverteilung zu erreichen, ist es beim Arbeiten mit Breitschlitzdüsen bekannt, das Maß der Dickenfehler zu reduzieren, das Dickenfehlerprofil also gleichsam zu planieren, und zwar nach Maßgabe des zunächst gemessenen Dickenfehlerprofils durch Verstellung der Spaltweite der Breitschlitzdüse. Auch die Superposition und Verteilung von gewollten singulären Dickenfehlern ist in diesem Zusammenhang bekannt. Zwar lassen sich durch diese bekannten Maßnahmen die Dickentoleranzen einengen, es bleibt jedoch ein störendes Dickenfehlerprofil mit störender Fehleraddition im Coil.

Demgegenüber liegt der Erfindung die Aufgabe zugrunde, das Verfahren so zu führen, daß ein Coil entsteht, welches mit wesentlich höherer Genauigkeit zylindrisch ist, als es bei den bekannten Maßnahmen erreicht werden kann.

Zur Lösung dieser Aufgabe lehrt die Erfindung, ausgehend von den eingangs beschriebenen bekannten Maßnahmen, daß als kompensierendes Dickenfehlerprofil mit Hilfe eines entsprechend eingestellten Rechners ein dem gemessenen Dickenfehlerprofil inverses Dickenfehlerprofil ermittelt, eine Kunststoffolie mit dem inversen Dickenfehlerprofil erzeugt sowie eine Anzahl von Lagen der Kunststoffolie mit diesem inversen Dickenfehlerprofil auf das Coil aufgewickelt wird, - undsoweiterfort, abwechselnd mit Lagen der Kunststoffolie mit Dickenfehlerprofil und weiteren Lagen mit inversem Dickenfehlerprofil, bis am Ende das ausreichend zylindrische Coil erzeugt worden ist. Vorzugsweise werden die letzten Lagen der Kunststoffolie aus dem inversen Dickenfehlerprofil aufgewickelt.

Erfindungsgemäß wird auf eine Einregelung der Dicke der Kunststoffolie auf den Sollwert verzichtet. Das kompensierende Dickenfehlerprofil ist erfindungsgemäß nicht mehr das Profil einer regeltechnischen Anpassung, sondern ein Profil mit in bezug auf die gemessenen Dickenfehler zwar inversen, aber gewollten Fehlern. Insoweit geht die Erfindung von der Erkenntnis aus, daß ein Einregeln an die Meßgenauigkeit bzw. die Regelgenauigkeit sehr hohe Anforderungen stellt und die statistische Streuung der Meßwerte sich heim Einregeln auf den Sollwert negativ auswirkt. Überraschenderweise wirken sich diese Probleme nicht negativ aus, wenn mit Hilfe eines entsprechend programmierten Rechners ein inverses Dickenfehlerprofil ermittelt und damit nach Maßgabe der Lehre der Erfindung verfahren wird. Die Erfindung nutzt die Tatsache, daß es nicht auf eine möglichst genaue Approximation der Dicke der Kunststoffolie an den Sollwert der Kunststoffoliendicke, sondern auf die Erzeugung eines faßreifen freien zylindrischen Coils ankommt, - und vermeidet dadurch die vorstehend angesprochenen regeltechnischen Maßnahmen und Probleme.

Das Dickenfehlerprofil einer Kunststoffolie kann mit den Hilfsmitteln der modernen Meßtechnik betriebsmäßig ohne Schwierigkeiten gemessen werden, z. B. mittels Durchstrahlung. Das ermittelte Dickenfehlerprofil wird einem Rechner aufgegeben, der so programmiert ist, daß er das inverse Dickenfehlerprofil ermittelt. Die Anzahl n der Lagen, mit der zweckmäßigerweise gearbeitet wird, läßt sich unschwer ermitteln. Diese Anzahl hängt unter anderem von der absoluten Dicke der Kunststoffolie ab. Der Rechner kann ohne weiteres berücksichtigen, daß die Länge der einzelnen Lagen beim Aufwickeln eines Coils von Lage zu Lage zunimmt. Das inverse Dickenfehlerprofil muß nicht die gleiche Amplitude aufweisen wie das Dickenfehlerprofil. Unterschiedliche Amplituden sind zulässig und können durch Abstimmung der Anzahl der Lagen, die mit dem Dickenfehlerprofil bzw. dem inversen Dickenfehlerprofil aufeinander gewickelt werden, kompensiert werden. Zu optimalen Ergebnissen kommt man, wenn das Dickenfehlerprofil der systematischen Fehler sehr genau gemessen wird und entsprechend genau die Spaltweite des Werkzeuges verstellt wird. Dazu sind verschiedene Maßnahmen bekannt (vgl. DE-A-34 27 912, DE-A-34 27 915, DE-A-35 30 383).

Ein besonderer Vorteil des erfindungsgemäßen Verfahrens besteht darin, daß mit feststehendem Werkzeug, aus dem die Kunststoffolie mittelbar oder unmittelbar austritt, gearbeitet werden kann. Konkret bedeutet das, daß eine Rotation des Blaskopfes bei der Blasfolienherstellung nicht mehr erforderlich ist. In der Ausführung für die Herstellung von Blasfolien, wobei zuerst ein Folienschlauch erzeugt und dieser in einer Flachlegevorrichtung flachgelegt wird, besteht ein weiterer Vorteil darin, daß der Folienschlauch in einer feststehenden Flachlegevorrichtung flachgelegt und danach unmittelbar, gegebenenfalls nach Faltkantenauftrennung, dem Coil zugeführt und dort aufgewickelt werden kann.

Im folgenden wird die Erfindung anhand einer lediglich ein Ausführungsbeispiel darstellenden Zeichnung ausführlicher erläutert. Es zeigen
- Fig. 1: die schematische Darstellung einer Anlage, die für das erfindungsgemäße Verfahren eingerichtet ist,
- Fig. 2: drei grafische Darstellungen, die das erfindungsgemäße Verfahren erläutern.

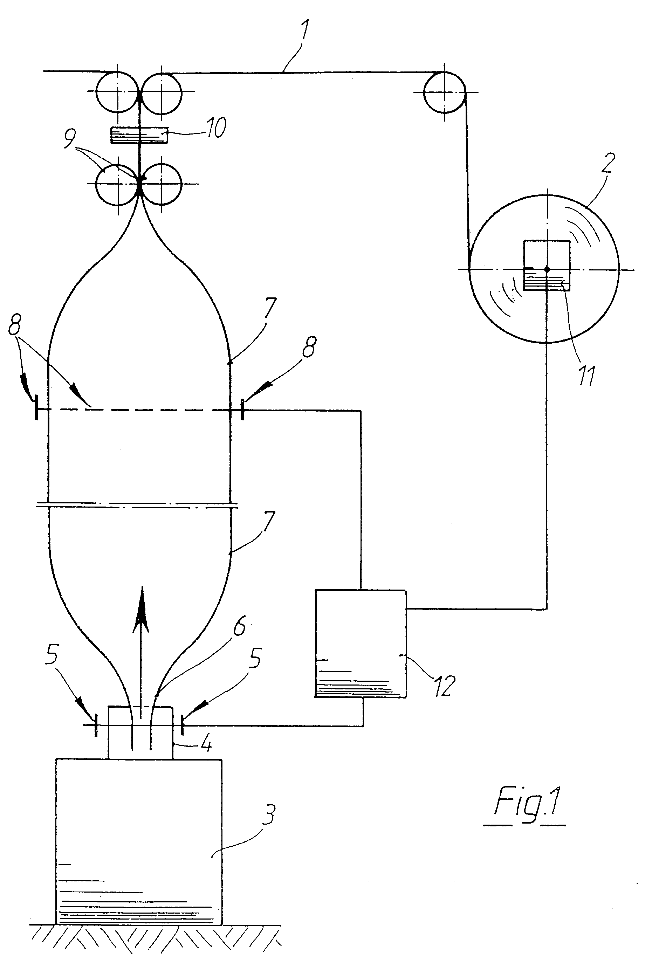

Die in Fig. 1 dargestellte Anlage dient der Herstellung einer Blasfolie 1, die zu einem Coil 2 aufgewickelt wird. Zur Anlage gehört ein Extruder 3 mit Blaskopf 4 und einer nicht gezeichneten Ringspaltdüse im Blaskopf 4. Die Ringspaltdüse ist von einer Ringspalteinstellvorrichtung 5 umgeben. Ein thermoplastifizierter Kunststoffschlauch 6 tritt aus der Ringspaltdüse aus. Er wird zur Folienblase 7 aufgeblasen. Die Folienblase 7 ist von einer Dickenmeßvorrichtung 8 für die Foliendicke umgeben. Die Folienblase wird der Flachlegeeinrichtung 9 zugeführt. Eine Trenneinrichtung 10 trennt die flachgelegte Folienblase in zwei einfach liegende Kunststoffolien 1 deren eine nach rechts, wie dargestellt, abgeführt und zum Coil 2 aufgewickelt wird, deren andere entsprechend nach links abgeführt und aufgewickelt wird. Die in der Figur dargestelle Aufwickeleinrichtung hat eine Meßeinrichtung 11, die es erlaubt, die Anzahl der Umdrehungen und damit die Anzahl der Lagen der zum Coil 2 aufgewickelten Kunststoffolie 1 zu messen. Die Meßwerte der Dickenmeßeinrichrung 8 und der Meßeinrichtung 11 für die Anzahl der Folienlagen wird dem Rechner 12 zugeführt. Dieser steuert die Ringspalteinstellvorrichtung 5.

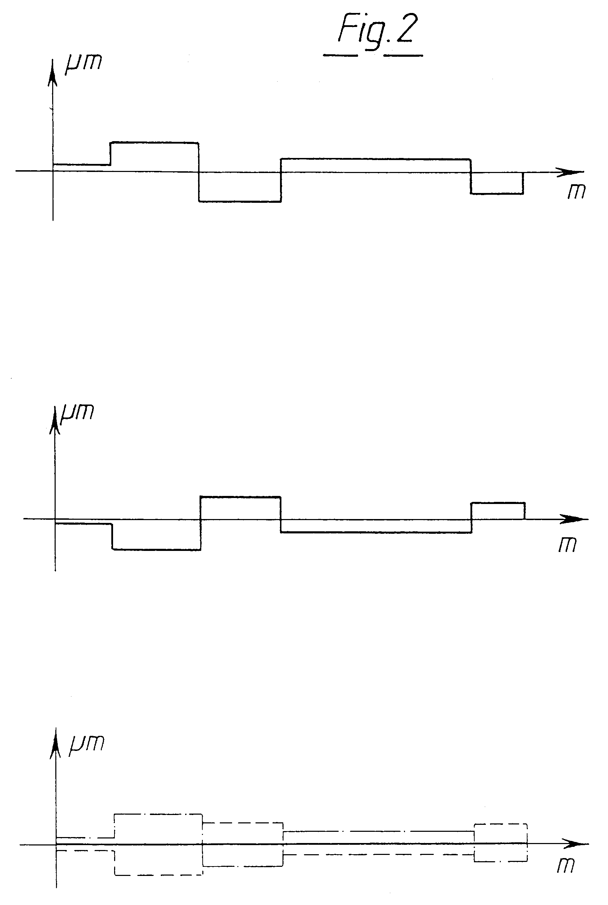

Die Fig. 2 zeigt übereinander drei grafische Darstellungen. Auf der Abszissenachse ist jeweils die Breite der Kunststoffolie in Metern aufgetragen. Auf der Ordinatenachse sind in µm die Dickenfehler aufgetragen. Man erkennt in der oberen grafischen Darstellung das Dickenfehlerprofil der hergestellten Kunststoffolie 1 mit seinen systematischen Dickenplusfehlern, die oberhalb der Abszissenachse angedeutet sind, und seinen systematischen Dickenminusfehlern, die unterhalb der Abszissenachse angeordnet sind. Eine Anzahl von n Lagen der mit den systematischen Dickenplusfehlern und/oder Dickenminusfehlern hergestellten Kunststoffolie 1 wird zum Coil aufgewickelt. Die Meßeinrichtung 11 mißt die Lagen. Das Dickenfehlerprofil wurde von der Dickenmeßeinrichtung 8 dem Rechner 12 zugeführt. Der Rechner 12 ermittelt das inverse Dickenfehlerprofil. Es ist in der mittleren grafischen Darstellung der Fig. 2 zu erkennen. Die untere grafische Darstellung in der Fig. 2 verdeutlicht die Superposition. Man erkennt, daß infolge der Superposition des Dickenfehlerprofils der systematischen Fehler und des inversen Dickenfehlerprofils in den aufgewickelten Lagen die Dickenfehler verschwinden. In der theoretischen Darstellung der Fig. 2 verschwinden sie vollständig, in der Praxis sind sie in hohem Grade ausgeglichen. Folglich wird am Ende ein ausreichend zylindrisches Coil 2 aufgewickelt.

## Patentansprüche

1. Verfahren zur kontinuierlichen Herstellung einer bahnförmigen Kunststoffolie aus thermoplastischem Kunststoff sowie zum Aufwickeln dieser Kunststoffolie zu einem Coil, wobei die hergestellte Kunststoffolie ein Dickenfehlerprofil mit systematischen Dickenplusfehlern und Dickenminusfehlern aufweist, das Dickenfehlerprofil der hergestellten Kunststoffolie vor dem Aufwickeln der Kunststoffolie zum Coil gemessen wird, wobei sich die Dickenfehler von mehreren Windungen überlagern, wobei ein die Dickenplusfehler bzw. die Dickenminusfehler kompensierendes Dickenfehlerprofil für die Kunststoffolie eingestellt und durch Überlagerung der das gemessene Dickenfehlerprofil aufweisenden Windungen mit das kompensierende Dickenfehlerprofil aufweisenden Windungen ein ausreichend zylindrischer Coil gebildet wird, **dadurch gekennzeichnet**, daß als kompensierendes Dickenfehlerprofil mit Hilfe eines entsprechend eingestellten Rechners ein dem gemessenen Dickenfehlerprofil inverses Dickenfehlerprofil ermittelt, eine Kunststoffolie mit dem inversen Dickenfehlerprofil erzeugt sowie eine Anzahl von Lagen der Kunststoffolie mit dem inversen Dickenfehlerprofil auf das Coil aufgewickelt wird, - undsoweiterfort, abwechselnd mit Lagen der Kunststoffolie mit Dickenfehlerprofil und weiteren Lagen mit inversem Dickenfehlerprofil, bis am Ende das ausreichend zylindrische Coil erzeugt worden ist.

2. Verfahren nach Anspruch 1, dadurch gekennzeichnet, daß die letzten Lagen der Kunststoffolie mit dem inversen Dickenfehlerprofil aufgewickelt werden.

## Claims

1. A process for the continuous production of a strip-shaped plastic film from synthetic thermoplastic material and for winding this plastic film to form a coil, wherein the plastic film produced has a thickness defect profile with systematic thickness plus defects and thickness minus defects and the thickness defect profile of the plastic film produced is measured before winding the plastic film to form a coil, wherein the thickness defects of a plurality of layers are superimposed, wherein a thickness defect profile which compensates for the thickness plus defects and the thickness minus defects, respectively, is set for the plastic film and by superimposing windings having the measured thickness defect profile with windings having the compensating thickness defect profile a satisfactorily cylindrical coil is formed, characterised in that a thickness defect profile which is the inverse of the measured thickness defect profile is determined as the compensating thickness defect profile with the aid of an appropriately adapted computer, a plastic film is produced with the inverse thickness defect profile and a number of layers of the plastic film with the inverse thickness defect profile is wound on the coil - and so on, with layers of the plastic film having the thickness defect profile alternating with further layers having the inverse thickness defect profile, until at the finish the satisfactorily cylindrical coil is produced.

2. A process according to claim 1, characterised in that the last layers of the plastic film are wound with the inverse thickness defect profile.

## Revendications

1. Procédé de fabrication en continu d'une feuille de matière thermoplastique en forme de bande, et d'enroulement de ladite feuille de matière plastique en une bobine, la feuille de matière plastique fabriquée présentant un profil d'erreurs d'épaisseur avec des erreurs d'épaisseur positives et négatives systématiques, le profil d'erreurs d'épaisseur de la feuille de matière plastique fabriquée étant mesuré avant l'enroulement de ladite feuille de matière plastique en bobine, les erreurs d'épaisseur de plusieurs spires se superposant les unes aux autres, avec obtention d'un profil d'erreurs d'épaisseur pour la feuille de matière plastique qui compense les erreurs d'épaisseur positives et respectivement négatives, et une bobine suffisamment cylindrique étant constituée par la superposition des spires présentant le profil d'erreurs d'épaisseur mesuré avec les spires présentant le profil d'erreurs d'épaisseur de compensation, caractérisé en ce que, à l'aide d'un calculateur réglé de manière adéquate, on détermine comme profil d'erreurs d'épaisseur de compensation, un profil d'erreurs d'épaisseur inverse par rapport au profil d'erreurs d'épaisseur mesuré, qu'une feuille de matière plastique présentant le profil d'erreurs d'épaisseur inverse est produite et qu'un nombre de couches de la feuille de matière plastique avec le profil d'erreurs d'épaisseur inverse sont enroulées sur la bobine, etc. en alternant des couches de la feuille de matière plastique présentant le profil d'erreurs d'épaisseur avec d'autres couches présentant le profil d'erreurs d'épaisseur inverse jusqu'à obtenir en fin de compte la bobine suffisamment cylindrique.

2. Procédé selon la revendication 1, caractérisé en ce que les dernières couches de la feuille de matière plastique sont enroulées avec le profil d'erreurs d'épaisseur inverse.
